# EUROPEAN PATENT SPECIFICATION

(11) **EP 0 632 251 B1**
(45) Date of publication and mention of the grant of the patent: **11.11.1998**
(21) Application number: 94110113.1
(22) Date of filing: 29.06.1994
(51) Int. Cl.: G01C 5/04

(54) **Deformation monitoring system for jig tool**
Verformungsüberwachungssystem für Ausrichtvorrichtung
Système de contrôle de déformation d'un outil de cabarit

(30) Priority: 29.06.1993 JP 158920/93
(43) Date of publication of application: 04.01.1995
(73) Proprietor: KAWASAKI JUKOGYO KABUSHIKI KAISHA, Chuo-ku, Kobe-shi, Hyogo-ken (JP)
(72) Inventor: Yamamoto, Koichi, Kakamigahara-shi, Gifu-ken (JP); Mitsuda, Hironobu, Seki-shi, Gifu-ken (JP); Tanabe, Kazuhide, Kakamigahara-shi, Gifu-ken (JP); Hama, Eiji, Gifu-shi, Gifu-ken (JP); Minoura, Haruo, Seki-shi, Gifu-ken (JP); Fuchi, Katsuo, Gifu-shi, Gifu-ken (JP)
(74) Representative: Klunker . Schmitt-Nilson . Hirsch

(56) References cited:
- US-A- 3 949 484
- US-A- 4 511 247
- US-A- 4 894 924
- PATENT ABSTRACTS OF JAPAN vol. 9, no. 320 (P-413) 14 December 1985 & JP-A-60 146 119 (SUMITOMO DENKI KOGYO KK) 1 August 1985

## Description

### BACKGROUND OF THE INVENTION

### Field of The Invention

The present invention relates to a level surface monitoring system for a large jig tool for monitoring a fact as to whether any differential subsiding is caused by age deterioration or age change to a ground on which a large jig tool is settled and any deformation over an allowable range is caused to the large jig tool.

### Related Prior Art

In a known art, when large structures or fabrications such as air crafts or ships are assembled, tools or jigs having large sizes have been utilized for positioning respective parts or elements. Since such large jig tool occupies a large area for settlement, the large jig tool is likely effected by a ground movement such as ground subsiding. Particularly, leg portions of the large jig tool for supporting a body of the large jig tool are likely partially subsided by the differential subsiding of the ground, and in such case, the large jig tool will be itself deformed through the age change.

For this reason, the deformation of the large jig tool due to the ground subsiding is amended or corrected by adjusting the leg portions thereof by means of, for example, screw jacks mounted to the respective leg portions through a periodical inspection, for example, once a year, in which the deformation of the large jig tool is measured by using a measuring machine such as transit.

However, recently, since it has been required to assemble a large structure with high assembling precision of parts or elements thereof, it becomes difficult to maintain the high assembling precision or performance of the large jig tool merely through the adjustment in the inspection or maintenance only once a year, thus providing a problem. For this reason, it has been required to monitor the deformation of the large jig tool before the assembling or fabrication of a large structure or in a real time.

Furthermore, in a prior art, there is provided a further problem such that when the deformation of the large jig tool is monitored by a conventional monitoring machine, much manual labor and time are required, further involving less measuring precision and less reproductivity.

A surface level monitoring system having the features of the preamble of claim 1 is known from US-A-3,949,484. US-A-4,894,924 discloses a surface level monitoring system having one reference liquid-level sensor means and at least one displacement sensor means. The float of this system is connected with a vertical stem which guides the float allowing movement of the float only in the vertical direction. The stem further transfers the float movement to a magnetic transducer generating the float signal. Patent Abstracts of Japan to JP 60146119 discloses an optical sensor for a liquid-level detection system to define the position of a float having a reflecting surface floating on the liquid surface.

An object of the present invention is to substantially eliminate defects or problems encountered in the prior art described above and to provide a level surface monitoring system for a large jig tool capable of monitoring, in a real time, a deformation of the large jig tool with high performance.

This and other objects can be achieved according to the present invention by providing a surface level monitoring system of claim 1.

The communicating tube may be provided with a plurality of vertical tubes having end openings and positioned at portions corresponding to the measuring areas of the respective displacement sensors. The floats are disposed in the respective vertical tubes.

The displacement sensors are preferably constructed by light sensors and, in such case, the float is provided with a light reflecting member mounted on an upper surface thereof.

The supporting members may have jack mechanisms for maintaining all the surface levels of the supporting members constant.

A temperature sensor may be further disposed in association with the large jig tool for calculating a thermal expansion coefficient of the large jig tool in accordance with a material constituting the large jig tool and for correcting an output from the displacement sensor in accordance with the thermal expansion coefficient.

According to the characteristics of the present invention described above, a plurality of displacement sensors are mounted to a plurality of supporting members of a large jig tool, respectively, each of the displacement sensors having a measuring area, a communicating tube is disposed on the base and in which a fluid fills and is provided with a plurality of openings at portions corresponding to the measuring areas of the respective displacement sensors, and a signal processing unit operatively connected to the displacement sensors to process signals transmitted therefrom and to monitor a surface level of the large jig tool. Accordingly, the entire fluid height in the communicating tube is made the same as reference level, and the displacements with respect to this reference level are measured and processed in a real time by the processing unit, which carries out the data processing and numerical value analysis at high speed, thus effectively and precisely monitoring the surface level of the large jig tool.

The location of the float in the fluid surface corresponding to the measuring areas of the displacement sensors can effectively suppress the flow of the fluid or vibration thereof causing measurement error and make uniform the condition of the surface level, thus improving the measurement precision. In a case where the light sensors are utilized as displacement sensors, the measurement can be done in non-contact method, and the provision of the light reflecting member on the upper surface of the float can improve the resolving power in the measurement and S/N ratio as well.

The natures and further features of the present invention will be made more clear hereunder through the following description with reference to the accompanying drawings.

### BRIEF DESCRIPTION OF THE DRAWINGS

In the accompanying drawings:
Fig. 1 is a perspective view of a level surface monitoring system for a large jig tool according to one preferred embodiment of the present invention;
Fig. 2 is a partial view in an enlarged scale of a leg member of the monitoring system of Fig. 1;
Fig. 3 is a vertical sectional view of a vertical tube in association with the monitoring system of Fig. 1;
Fig. 4 is a partial perspective view of the vertical tube of Fig. 3;
Fig. 5 is a modified view of the vertical tube of Fig. 3; and
Figs. 6A and 6B are views for the explanatory of operations of the monitoring system of Fig. 1.

### DESCRIPTION OF THE PREFERRED EMBODIMENT

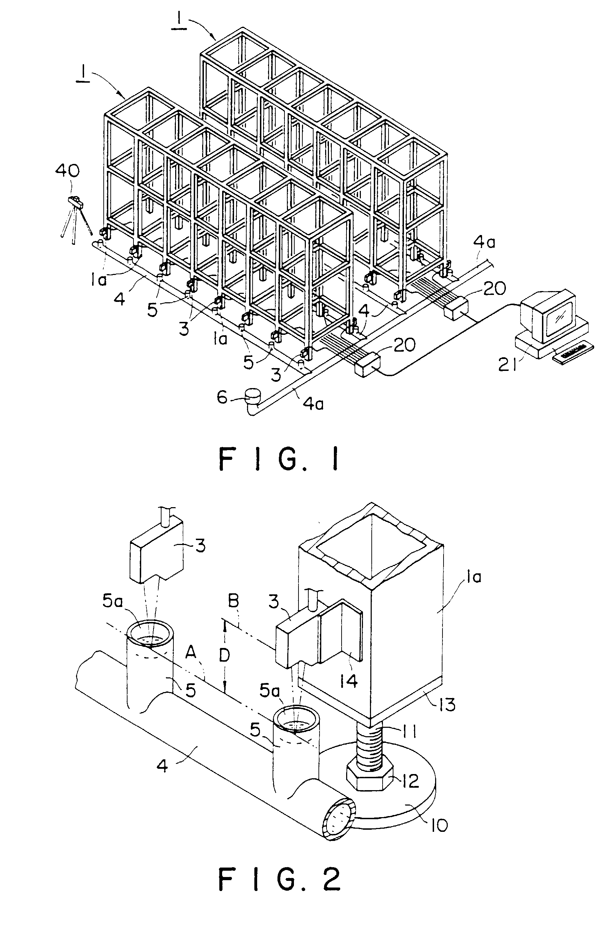

Fig. 1 is a perspective view of a level surface monitoring system for a large jig tool according to one embodiment of the present invention. Referring to Fig. 1, a large jig tool 1 is composed of a large number of shaft-shaped members assembled in a lattice structure so as to provide a frame shape. The large jig tool 1 has, for example, a longitudinal length of about 12m and a height of about 7m. In Fig. 1, two large jig tools 1 are illustrated, and the large jig tools 1 are settled on a flat surface base such as flat floor or ground each through a plurality of leg members 1a as tool body supporting members.

In the illustration of Fig. 1, a displacement sensor 3 such as light sensor is mounted to each of the leg members 1a and each of the displacement sensors has own measuring area. A communicating tube 4 is horizontally disposed in association with the displacement sensors 3 and a plurality of vertical tubes 5 is connected to the communicating tube 4 to stand vertically at portions corresponding to the measuring areas of the displacement sensors 3, respectively. A fluid such as water or oil fills in the communicating tube and a fluid amount is adjusted so that a fluid level is near an upper end opening portion of each of the vertical tubes 5 when they are disposed in usable attitudes. A reservoir tank 6, in which a predetermined amount of fluid is stored, is connected to one end of a communicating tube 4a so as to make up the fluid therein for the compensation for natural evaporation or leakage of the fluid.

When a plurality of large jig tools 1 are disposed, a plurality of communicating tubes 4 are also disposed in the manner such as shown in Fig. 1 and these communicating tubes 4 are also connected through another communicating tube 4a.

The respective displacement sensors 3 detect the fluid surface levels in the corresponding vertical tubes 5 and generate signals, which are collected to a signal relay means 20 located for each one of the large jig tools 1. Data collected by the respective signal relay means 20 are inputted into a data processing unit 21 including a computer, a key board and a monitoring device.

In a case where a periodical inspection or measurement correction is carried out, a visual survey is performed by means of a transit 40, for example, to thereby set a reference position of the large jig tool 1.

Fig. 2 is a perspective view of one leg member 1a shown in Fig. 1 and its associated members in an enlarged scale. With reference to Fig. 2, the leg member 1a has a rectangular column shape having a bottom plate 13 with which a screw 11 is screw engaged. The screw 11 is engaged with a circular plate 10, which is mounted on the flat floor base, by means of a bolt head 12. These members 10, 11 and 12 constitute, as a whole, a screw jack means for vertically moving the leg member 1a, which is moved up and down by rotating the bolt head 12 by means of a tool such as spanner.

The displacement sensor 3 is mounted to a predetermined portion, outer surface of a side wall portion in the illustration, of the leg member 1a through a fixing piece 14. The communicating tube 4 is displaced on the flat floor base so that the opening 5a of the respective vertical tubes 5 are directed upward and upper openings thereof correspond to the measuring areas of the respective displacement sensors 3. In this arrangement, each of the displacement sensors 3 can measure a distance D between the fluid level A in the vertical tube 5 and the reference height B of the displacement sensor 3.

Further, a float is disposed in accordance with the fluid level height in the vertical tube 5 for uniforming minute vibration of the fluid surface in the vertical tube 5 and for improving the detection performance of the displacement sensor 3.

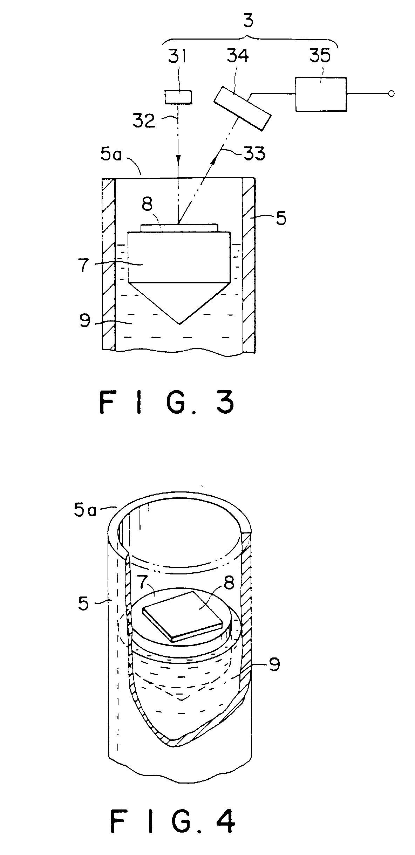

Fig. 3 is an elevational view partially of the vertical tube 5 and Fig. 4 is a perspective view thereof. Referring to Figs. 3 and 4, a float 7 formed of a water repellent substance such as polypropylene having a specific gravity of a value less than 1 is disposed in the fluid 9 in the vertical tube 5 in a floating manner. It is preferred that the float 7 has a columnar shape having a conical lower portion for stabilizing its attitude in the floating state, and the float 7 has an upper surface, above the fluid level in the floating state, on which a light reflecting plate or film 8 formed of, for example, a white alumina ceramic material, is secured.

In one example in which a light sensor is utilized as the displacement sensor 3, as shown in Fig. 3, a light beam 32 is projected from a substantially directly above portion of the light reflecting plate 8 of the float 7 from a light projecting source 31 such as semiconductor laser. The scattered light 33 reflected from the reflecting plate 7 is received as a spot light by a receiving element such as PSD (photoelectric position sensing device) or CCD (charge coupled device). In the next step, a signal processing circuit connected to the light receiving element 34 operates the barycentric coordinates of the received spot light and the operated spot light is then outputted as analog signal or digital signal. In such arrangement, when the light sensor 3 and the float 7 or at least either one of them is displaced relatively vertically, the spot light to the light receiving element 34 is displaced vertically. Accordingly, this displacement amount is calculated by the trigonometory to thereby calculate the distance D in Fig. 2.

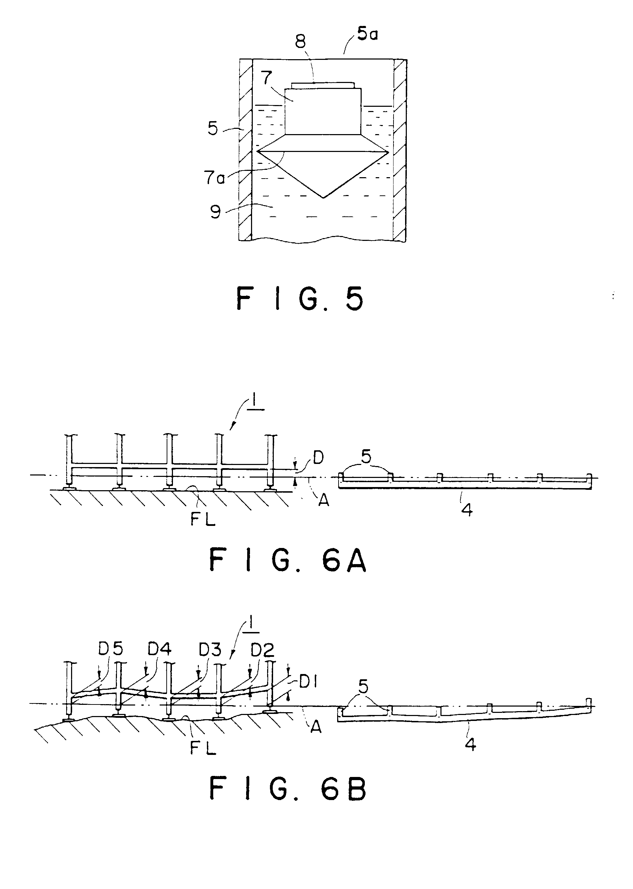

Fig. 5 is a view similar to that of Fig. 3 showing another example of the float 7. The float 7 shown in Fig. 5 has a circular flanged portion 7a at the lower conical portion thereof in comparison with that of Fig. 3. The example of the float of Fig. 5 differs in this structure from that of Fig. 3. The flanged portion 7a is designed so as to have an outer diameter slightly smaller than an inner diameter of the vertical tube 5 to prevent the center of the float 7 from being shifted from the center of the vertical tube 5, which may be caused by the vibration of the fluid surface or the surface tension between the float 7 and the fluid 9 in the vertical tube 5.

In another example, a plurality of openings may be directly formed to the communicating tube at portions corresponding to the measuring areas of the displacement sensors in place of the location of the vertical tubes. In such example, the floats will be disposed at portions of the openings in the floating manner.

The operation of the surface level monitoring system for the large jig tool according to the present invention will be described hereunder with reference to Figs. 6A and 6B.

First, with reference to Fig. 6A, assuming a case in which a large jig tool 1 is placed on a ground having a constant height of floor level FL, distances D between the surface level A of the fluid in the communicating tube 4 and the respective displacement sensors 3 are measured, and the measured data are inputted into the data processing unit 21 of Fig. 1 with respect to the respective displacement sensors 3. These measured data, i.e. values, are memorized as reference distances for the respective displacement sensors 3.

In a case where the ground is locally subsided through time elapsing, the floor level height varies so as to provide a curved surface and the large jig tool 1 is also deformed by its self-gravity. The communicating tube 4 disposed on the floor level FL is also deformed in accordance with the subsiding of the ground, but the surface level heights of the fluid at the opening portion of the respective vertical tubes 5 formed with the communicating tube 4 can be always maintained to the level surfaces.

On the other hand, the positions of the displacement sensors 3 mounted to the respective leg members 1a of the large jig tool 1 vary in accordance with the subsiding of the ground, so that the respective displacement sensors 3 output signals representing the measured distances D1 - D5 which are different from the reference distance memorized in the state of Fig. 6A.

Accordingly, the vertical displacements of the respective leg members 1a can be calculated by comparing the measured distances D1 - D5 with the reference distances of the respective displacement sensors 3 and operating the differences between the measured distances and the reference distances, respectively. The difference between the maximum displacement and the minimum displacement within the measured distances may be measured as a threshold value, and for example, in case of the threshold value exceeding 250 µm, an alarm will be generated through an alarm noise generating means or alarm display means to inform an operator of an abnormal condition.

When the outputs from the respective displacement sensors 3 are inputted into the data processing unit 21, the outputs are inputted every predetermined constant cycle or period as sampling values, and accordingly, in order to avoid the affect of the surface vibration of the fluid in the communicating tube, it is desired to calculate the moving average of 20, for example, numbers of sampling values. Further, it will be possible to forecast the tendency of the ground subsiding by statistically analyzing the change with age and the distribution of the measured data.

Furthermore, although it may be assumed that the leg members 1a are thermally expanded through the temperature change in the surrounding environment, the measurement can be realized with high precision according to the present invention by locating temperature sensors in the vicinities of the large jig tool 1, calculating the thermally expanded amount in accordance with a thermal expansion coefficient of the substance of the large jig tool 1 and then correcting the outputs from the respective displacement sensors 3.

In the described manner, after the vertical displacements of the respective leg members 1a are measured, the screw jack means of Fig. 2 are operated to adjust all the vertical displacements to a constant value, for example, zero value. According to this method, the level surfaces of all the leg members 1a of the large jig tool 1 can be entirely maintained to a constant value even in a case where the floor height level FL be changed in a curved surface shape.

In the described embodiment, the light sensor is utilized as the displacement sensor, but any other means for measuring a distance from the fluid surface or float may be utilized with no problem, and for example, a displacement sensor utilizing a capacitance type code or change of a magnetic field may be utilized.

According to the present invention, as described above, the change or deformation of a large jig tool with reference to a surface level can be monitored in a real time with high precision, so that the high performance of the large jig tool can be always maintained. Furthermore, tendency of ground subsiding can be clearly grasped by processing the measured data of the vertical displacement of leg members of the large jig tool, thus also improving the performance of the large jig tool.

## Claims

1. A surface level monitoring system for a jig tool (1) which is placed on a a base through a plurality of supporting members (1a), in which a deformation of the jig tool (1) due to a differential subsiding through an age change is monitored, comprising:
a plurality of displacement sensor means (3) each having a measuring area;
a communicating tube (4) in which a fluid (9) fills, said communicating tube (4) being provided with a plurality of openings (5a) at portions corresponding to the measuring areas of the respective displacement sensor means (3);
a float (7) which is floated in the fluid (9) in the communicating tube (4) to be vertically movable in a vertical tube (5) in accordance with a height of a surface of the fluid (9), and has a lower conical portion; and
a signal processing unit (21) operatively connected to the displacement sensor means (3) to process signals transmitted therefrom and to monitor a surface level of the jig tool (1);
**characterized in that**
a plurality of displacement sensor means (3) is mounted to a plurality of supporting members (1a) of the jig tool (1), respectively;
the communicating tube (4) is disposed on the base; and
the openings (5a) formed to the communicating tube (4) each has a circular shape and the float (7) has a circular columnar shape and is provided with a flanged portion (7a) having a diameter slightly smaller than an inner diameter of the opening (5a), so as to prevent the center of the float (7) from being shifted from the center of the vertical tube (5), which may be caused by the vibration of the fluid surface or the surface tension between the float (7) and the fluid (9) in the vertical tube (5).

2. The surface level monitoring system according to claim 1, wherein said displacement sensor means (3) are light sensors and wherein said float (7) is provided with a light reflecting member (8) mounted on an upper surface thereof.

3. The surface level monitoring system according to claim 1 or 2, wherein said communicating tube (4) is provided with a plurality of vertical tubes (5) having end openings (5a) and positioned at portions corresponding to the measuring areas of the respective displacement sensor means (3).

4. The surface level monitoring system according to claim 3, wherein a plurality of floats (7) are floated in the fluid in the vertical tubes (5), respectively, to be vertically movable in accordance with a height of surface of the fluid.

5. The surface level monitoring system according to any of claims 1 to 4, wherein the supporting members (1a) have jack means (10, 11, 12) for maintaining all the surface levels of the supporting members (1a) constant.

6. The surface level monitoring system according to any of claims 1 to 5, wherein a temperature sensor is further disposed in association with the jig tool (1) for calculating a thermal expansion coefficient of the jig tool (1) in accordance with a material constituting the jig tool (1) and for correcting an output from the displacement sensor (3) in accordance with the thermal expansion coefficient.

## Patentansprüche

1. Oberflächenniveau-Überwachungssystem für eine Gerüstvorrichtung (1), die mittels einer Mehrzahl von Tragelementen (la) auf einer Basis angeordnet ist, wobei eine Verformung der Gerüstvorrichtung (1) aufgrund eines unterschiedlichen Absinkens durch Veränderung im Verlauf der Zeit überwacht wird, mit:
einer Mehrzahl von Verlagerungssensoreinrichtungen (3), deren jede einen Meßbereich aufweist;
ein Verbindungsrohr (4), in dem ein Fluid (9) eingefüllt ist, wobei das Verbindungsrohr (4) an den Meßbereichen der jeweiligen Verlagerungssensoreinrichtung (2) entsprechenden Bereichen mit einer Mehrzahl von Öffnungen (5a) versehen ist;
einem Schwimmkörper (7), der in dem Fluid (9) in dem Verbindungsrohr (4) derart schwimmend angeordnet ist, daß er in einem vertikalen Rohr (5) nach Maßgabe einer Höhe einer Oberfläche des Fluids (9) vertikal beweglich ist und der einen unteren konischen Bereich aufweist; und
mit einer Signalverarbeitungseinheit (21), die betriebsmäßig mit den Verlagerungssensoreinrichtungen (3) verbunden ist, um von diesen übertragene Signale zu verarbeiten und ein Oberflächenniveau der Gerüstvorrichtung (1) zu überwachen;
dadurch gekennzeichnet,
daß jeweils eine von mehreren Verlagerungssensoreinrichtungen (3) an einem von mehreren Tragelementen (1a) der Gerüstvorrichtung (1) angebracht ist;
daß das Verbindungsrohr (4) auf der Basis angeordnet ist; und
daß die in dem Verbindungsrohr (4) ausgebildeten Öffnungen (5a) jeweils eine kreisförmige Formgebung aufweisen und der Schwimmkörper (7) eine kreisförmige Säulenform besitzt und mit einem Flanschbereich (7a) versehen ist, der einen geringfügig kleineren Durchmesser als ein Innendurchmesser der Öffnung (5a) aufweist, so daß eine Verlagerung des Zentrums des Schwimmkörpers (7) von dem Zentrum des vertikalen Rohrs (5) verhindert ist, die durch die Vibration der Fluidoberfläche oder die Oberflächenspannung zwischen dem Schwimmkörper (7) und dem Fluid (9) in dem vertikalen Rohr (5) hevorgerufen werden kann.

2. Oberflächenniveau-Überwachungssystem nach Anspruch 1,
wobei es sich bei den Verlagerungssensoreinrichtungen (3) um Lichtsensoren handelt und wobei der Schwimmkörper (7) mit einem lichtreflektierenden Element (8) versehen ist, das an einer oberen Oberfläche desselben angebracht ist.

3. Oberflächenniveau-Überwachungssystem nach Anspruch 1 oder 2,
wobei das Verbindungsrohr (4) mit einer Mehrzahl von vertikalen Rohren (5) versehen ist, die Endöffnungen (5a) aufweisen und in den Meßbereichen der jeweiligen Verlagerungssensoreinrichtungen (3) entsprechenden Bereichen positioniert sind.

4. Oberflächenniveau-Überwachungssystem nach Anspruch 3,
wobei eine Mehrzahl von Schwimmkörpern (7) in dem Fluid in den vertikalen Rohren (5) jeweils derart schwimmend angeordnet ist, daß sie nach Maßgabe einer Oberflächenhöhe des Fluids vertikal beweglich sind.

5. Oberflächenniveau-Überwachungssystem nach einem der Ansprüche 1 bis 4,
wobei die Tragelemente (1a) Hebereinrichtungen (10, 11, 12) zum Konstanthalten von allen Oberflächenniveaus der Tragelemente (1a) aufweisen.

6. Oberflächenniveau-Überwachungssystem nach einem der Ansprüche 1 bis 5,
wobei ferner ein Temperatursensor in Zuordnung zu der Gerüstvorrichtung (1) vorgesehen ist, um einen Wärmeausdehnungskoeffizienten der Gerüstvorrichtung (1) nach Maßgabe eines die Gerüstvorrichtung (1) bildenden Materials zu berechnen und um ein Ausgangssignal von dem Verlagerungssensor (3) nach Maßgabe des Wärmeausdehnungskoeffizienten zu korrigieren.

## Revendications

1. Système de contrôle de niveau d'un outil de gabarit (1) qui est placé sur une embase par l'intermédiaire d'une pluralité d'éléments de support (1a), dans lequel une déformation de l'outil de gabarit (1) due à un affaissement différentiel en raison du vieillissement est contrôlée, comprenant :
une pluralité de moyens (3) de détection de déplacement comportant chacun une surface de mesure ;
un tube de communication (4) rempli d'un fluide (9), ledit tube (4) étant muni d'une pluralité d'orifices (5a) sur des parties correspondant aux surfaces de mesure des moyens (3) de détection respective de déplacement ;
un flotteur (7) qui flotte dans le fluide (9) dans le tube de communication (4) de façon à être verticalement déplaçable dans un tube vertical (5) en fonction de la hauteur de la surface du fluide (9), et qui comporte une partie inférieure conique ; et
un ensemble (21) de traitement de signaux fonctionnellement relié aux moyens (3) détecteurs de déplacement pour traiter les signaux transmis par eux et pour contrôler le niveau de l'outil de gabarit ;
caractérisé en ce que
une pluralité de moyens détecteurs de déplacement (3) est montée sur une pluralité d'éléments de support (la) de l'outil de gabarit (1), respectivement ;
le tube de communication (4) est disposé sur l'embase ; et
les orifices (5a) formés sur le tube de communication (4) possèdent chacun une forme circulaire et le flotteur (7) a la forme d'une colonne circulaire et est muni d'un rebord (7a) possédant un diamètre légèrement plus petit que le diamètre interne de l'orifice (5a), de façon à empêcher que le centre du flotteur (7) soit décalé à partir du centre du tube vertical (5), ce qui peut être provoqué par la vibration de la surface du fluide ou la tension superficielle entre le flotteur (7) et le fluide (9) dans le tube vertical (5).

2. Système de contrôle de niveau suivant la revendication 1, caractérisé en ce que les moyens détecteurs de déplacement précités (3) sont des détecteurs à lumière et en ce que ledit flotteur est pourvu d'un élément (8) réfléchissant la lumière et monté sur une surface supérieure du flotteur.

3. Système de contrôle de niveau suivant la revendication 1 ou 2, caractérisé en ce que le tube précité de communication (4) est pourvu d'une pluralité de tubes verticaux (5) possédant des orifices terminaux (5a) et positionnés sur des parties correspondant aux surfaces de mesure des moyens détecteurs de déplacement respectifs (3).

4. Système de contrôle de niveau suivant la revendication 3, caractérisé en ce qu'une pluralité de flotteurs (7) flotte dans le fluide dans les tubes verticaux respectivement, de façon à être verticalement déplaçables en fonction de la hauteur de la surface du fluide.

5. Système de contrôle de niveau suivant l'une quelconque des revendications 1 à 4, caractérisé en ce que les éléments de support (la) comportent des moyens formant vérins (10, 11, 12) pour maintenir constants tous les niveaux de surface des éléments de support (la).

6. Système de contrôle de niveau suivant l'une quelconque des revendications 1 à 5, caractérisé en ce qu'un détecteur de température est en outre disposé de façon associée à l'outil de gabarit pour calculer un coefficient d'expansion thermique de l'outil de gabarit (1) en fonction du matériau constituant l'outil de gabarit (1) et pour corriger une sortie du détecteur de déplacement (3) en fonction du coefficient d'expansion thermique.
